(19) Europäisches Patentamt
European Patent Office
Office européen des brevets

(11) **EP 4 742 506 A1**

(12) **EUROPEAN PATENT APPLICATION**

(43) Date of publication:
**13.05.2026 Bulletin 2026/20**

(21) Application number: 25213190.9

(22) Date of filing: **04.11.2025**

(51) International Patent Classification (IPC):
**H02K 3/28** (2006.01)

(52) Cooperative Patent Classification (CPC):
**H02K 3/28**; H02K 2213/03

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **07.11.2024 KR 20240156939**
**03.04.2025 KR 20250043273**

(71) Applicant: **Hyundai Mobis Co., Ltd.**
**Gangnam-gu**
**Seoul 06141 (KR)**

(72) Inventor: **LEE, Jae Min**
**16891 Yongin-si, Gyeonggi-do (KR)**

(74) Representative: **Jung, Minkyu**
**Wuesthoff & Wuesthoff**
**Patentanwälte und Rechtsanwalt PartG mbB**
**Schweigerstraße 2**
**81541 München (DE)**

(54) **CONTINUOUS WINDING ASSEMBLY**

(57) The present disclosure relates to a continuous winding assembly, and more particularly, to a continuous winding assembly wound on a motor stator. The continuous winding assembly of the present disclosure satisfies the balance of back electromotive force and inductance by having windings between each parallel circuit, which are interconnected to form a series winding, and adopt a specific pitch and shape, and allows each wire to be connected to be positioned in the same phase to enable welding without twisting, thereby having the effect of easily forming a series winding without a terminal assembly.

FIG. 3

EP 4 742 506 A1

## Description

### TECHNICAL FIELD

The following disclosure relates to a continuous winding assembly, and more particularly, to a continuous winding assembly wound on a motor stator.

### BACKGROUND

In motor design, applying each winding maximizes a slot filling ratio, enabling miniaturization of a motor. When inserting each winding into a slot, unlike a circular wire, there is a layer concept, and an inductance varies for each layer. In addition, since a back electromotive force phase is different for each slot, when applying a parallel circuit, a balanced winding layout design is essential to eliminate the inductance difference and back electromotive force phase difference between parallels. When such an imbalance occurs, a circulating current may occur, which may lead to motor overheating. Accordingly, the rules for arranging coils in slots and layers were very limited.

Like hairpin windings, continuous windings also require winding layout that considers the inductance balance and the back electromotive force phase balance. However, the hairpin windings should be arranged at the same pitch due to restrictions on welded parts, whereas the continuous windings have the advantage of high freedom in arranging pitches on both sides of the crown because there are no welded parts. However, this degree of freedom may also act as a disadvantage that increases the complexity of design. In particular, when a terminal assembly is required, it may be disadvantageous in terms of cost and quality due to increased material costs, the increased number of welding operations, and process complexity.

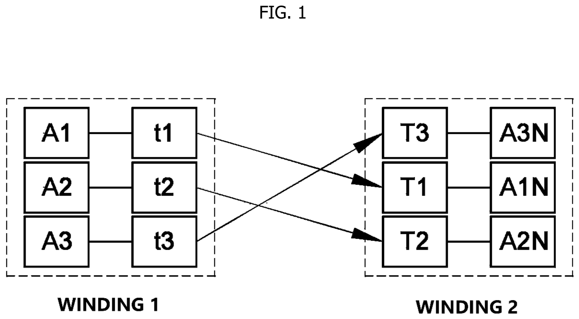

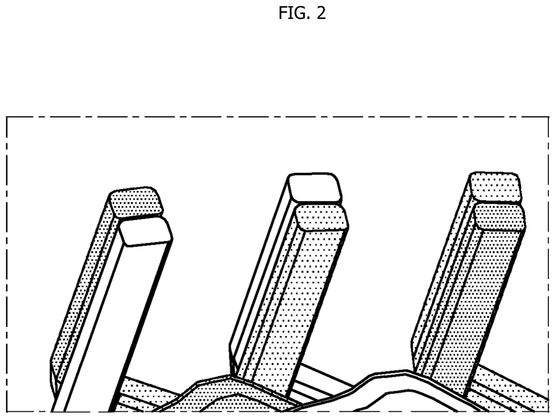

In addition, when connecting windings between parallel circuits using continuous windings to form a series winding, as illustrated in FIGS. 1 and 2, there were cases where the connection structure of the windings between the parallel circuits was misaligned in order to maintain the balance of the back electromotive force and inductance. In other words, as illustrated in FIG. 2, since the windings of the same phase (same color) should be connected to each other when the windings are arranged, there was a problem that the terminal assembly had to be used to implement this.

[Related Art Document]

[Patent Document]

(Patent Document 1) US Patent No. 7269888 "Method of making cascaded multilayer stator winding with interleaved transitions"

## SUMMARY

An embodiment of the present disclosure is directed to providing a continuous winding assembly that satisfies a balance of back electromotive force and inductance by having windings between each parallel circuit, which are interconnected to form a series winding, and adopt a specific pitch and shape, and allows each wire to be connected to be positioned in the same phase to enable welding without twisting, thereby easily forming a series winding without a terminal assembly.

Means for solving the Problems

In one general aspect, a continuous winding assembly applied to a stator, the stator including, for each pole of a rotor, a predetermined group of slots adjacent and provided at continuous positions to the poles of the rotor includes: a first winding portion that includes a plurality of windings extending along a circumferential direction of the stator and arranged in parallel with each other, each of which is wound by being inserted one by one into the slots included in the slot group; and a second winding portion that is electrically connected to the first winding portion, and includes the plurality of windings extending along the circumferential direction of the stator and arranged in parallel with each other, each of which is wound by being inserted one by one into the slots included in the slot group, in which each of the windings of the first winding portion and each of the windings of the second winding portion are connected in a one-to-one correspondence with each other, but are connected to each other by being in direct contact with each other, the windings are inserted into the slots by forming a plurality of layers in a radial direction, each of the windings included in the first winding portion does not intersect each other within the same layer, and each of the windings included in the second winding portion does not intersect each other within the same layer.

An end of the second winding portion may be inserted into the slot group adjacent to the slot group into which an end of the winding of the first winding portion is inserted.

The winding may include: a plurality of slot insertion portions that are inserted into the slots and extend in an axial direction of a motor; a jump portion that is provided between the slot insert parts and extends by a predetermined pitch; and at least two single-layer parts that are wound on the one layer, and the one single-layer part may include the slot insertion portions that are inserted one by one per slot group adjacent to all the poles, and at least one layer jump part that is provided between two or more of the single-layer parts and crosses two or more of the layers.

The jump portions included in the first winding portion and the second winding portion may have

one pitch value selected from among 7 pitches, 9 pitches, and 11 pitches, the jump portions of each parallel winding included in the first winding portion may not intersect each other, and the jump portions of each parallel winding included in the second winding portion may not intersect each other.

The layer jump parts included in the first winding portion and the second winding portion may have one pitch value selected from among 8 pitches, 9 pitches, and 10 pitches.

The total number of layers in which the first winding portion and the second winding portion are wound may be a multiple of 3.

The number N1 of the layer jump parts included in each parallel winding of the first winding portion and the number N2 of the layer jump parts included in each parallel winding of the second winding portion may follow the following Equation.

$$Equation: \begin{array}{l} N1 = p(k-1) \\ N2 = q(m-k-1) \end{array}$$

(Here,

N1: The number of layer jump parts of the winding of the first winding portion
N2: The number of layer jump parts of the winding of the second winding portion
p, q: Constants (integers greater than or equal to 1)
m: Total number of layers (multiples of 3)
k: The number of odd-numbered layers based on the radial direction)

When the total number of poles of the motor is S, the layer jump part may be formed between the slot insertion portion where each of the windings is wound for an nSth time and the slot insertion portion where each of the windings is wound for an nS+1th time (n is a natural number).

The single layer part of the first winding portion may be wound on an odd-numbered layer based on the radial direction, and the single layer part of the second winding portion may be wound on an even-numbered layer based on the radial direction.

The layer jump part may traverse either the odd-numbered or even-numbered layer based on the radial direction.

## BRIEF DESCRIPTION OF THE DRAWINGS

FIG. 1 is a schematic diagram illustrating a winding configuration and its connection relationship of the related art.
FIG. 2 is a partial perspective view illustrating a coupling relationship between windings of the related art.
FIG. 3 is a schematic diagram illustrating a winding configuration and its connection relationship of the present disclosure.
FIG. 4 is a partial plan view illustrating a layer of a winding of the present disclosure.
FIG. 5 is a schematic diagram illustrating a portion of an arrangement of a single-layer part of a winding of the present disclosure.
FIG. 6 is a schematic diagram illustrating a layer jump part of a winding of the present disclosure.
FIG. 7 is a schematic diagram illustrating a portion of an arrangement of a first winding portion of the present disclosure.
FIG. 8 is a schematic diagram illustrating a portion of an arrangement of a second winding portion of the present disclosure.
FIG. 9 is a schematic diagram illustrating a coupling relationship of the first and second windings of the present disclosure.
FIG. 10 is a partial perspective view illustrating a coupling relationship of the first and second windings of the present disclosure.

[Detailed Description of Main Elements]

1000: Continuous winding assembly
100: First winding portion
110: First wire
120: Second wire
130: Third wire
200: Second winding portion
210: Fourth wire
220: Fifth wire
230: Sixth wire
300: Slot insertion portion
400: Jump portion
500: Single-layer part
600: Layer jump part
L-1: First wire
L-2: Second layer
L-3: Third layer
L-4: Fourth layer
L-5: Fifth layer
L-6: Sixth layer
St: Stator
SG: Slot group
S-X: Xth slot
S-Y: Yth slot
S-Z: Zth slot

## DETAILED DESCRIPTION OF EMBODIMENTS

Hereinafter, a technical idea of the present disclosure will be described in more detail with reference to the accompanying drawings. Terms and words used in the present specification and claims are not to be construed as a general or dictionary meaning, but are to be construed as meaning and concepts meeting the technical ideas of the present disclosure based on a principle that the present inventors may appropriately define the concepts of terms in order to describe their inventions in best mode.

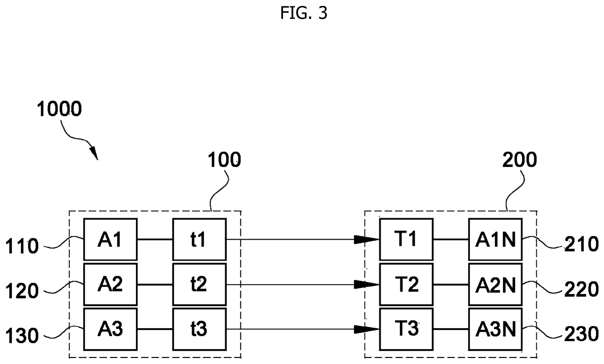

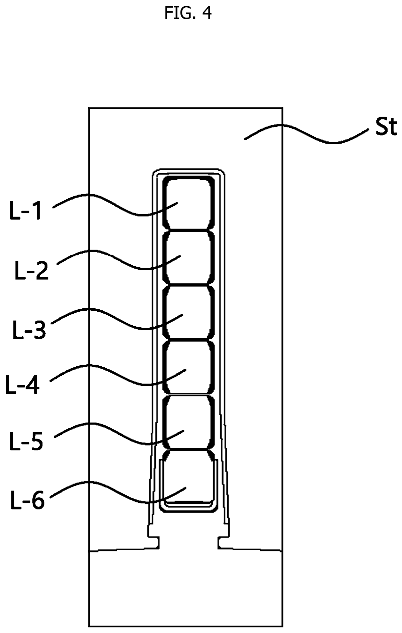

Hereinafter, a basic configuration of the continuous winding assembly 1000 of the present disclosure will be described with reference to FIGS. 3 and 4.

The continuous winding assembly 1000 of the present disclosure is applied to a stator St, in which the stator includes, for each pole of a rotor, a predetermined group of slots Sg adjacent and provided at continuous positions to the poles of the rotor. As illustrated in FIG. 3, the continuous winding assembly 1000 may include a first winding portion 100 and a second winding portion 200. In more detail, the first winding portion 100 may include a plurality of windings that extend along a circumferential direction of the stator St, and are wound by being inserted one by one into the slots included in the slot group Sg, and the second winding portion 200 may be electrically connected to the first winding portion 100, and include a plurality of windings that are extend along the circumferential direction of the stator St, and are wound by being inserted one by one into the slots included in the slot group Sg.

In this case, an end of the second winding portion 200 may be inserted into the slot group Sg adjacent to the slot group Sg into which an end of the winding of the first winding portion 100 is inserted, and an end of the first winding portion 100 and an end of the second winding portion 200 may be electrically connected to each other by welding. In addition, each of the windings included in the first winding portion 100 and the second winding portion 200 may be inserted into the slot in a radial direction to form a plurality of layers, and each of the windings included in the first winding portion 100 and the second winding portion 200 may be wound so as not to intersect each other within the same layer. Accordingly, the overlap between the first winding portion 100 and the second winding portion 200 may be minimized, and accordingly, a width of a radial area to be wound may be reduced, thereby reducing a radial size of a motor system.

In addition, the number of layers of wires laminated in the slot may be provided in multiples of 3 from an innermost side of the slot. More specifically, as illustrated in FIG. 4, six layers may be provided. The following description will be based on six layers, and each layer is named as a first layer L-1, a second layer L-2, a third layer L-3, a fourth layer L-4, a fifth layer L-5, and a sixth layer L-6. In addition, the slot group Sg may be composed of three consecutive slots, and may include an X slot S-X provided on one edge of the slots, a Y slot S-Y located in the center of the slots, and a Z slot S-Z located on the other edge of the slots.

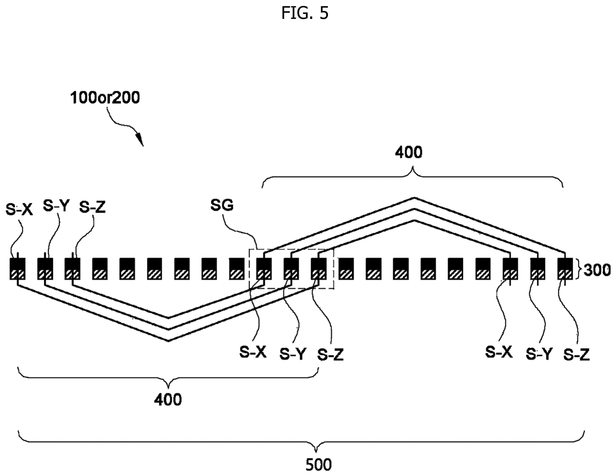

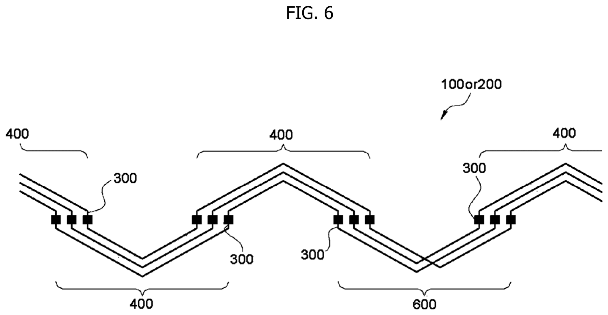

Hereinafter, a single-layer part 500 and a layer jump part 600 included in each winding of the present disclosure will be described with reference to FIGS. 5 and 6.

As illustrated in FIG. 5, each of the windings included in the first winding portion 100 and the second winding portion 200 may include a plurality of slot insertion portions 300 that are inserted into slots and extend in the axial direction of the motor, and a jump portion 400 that is provided between the slot insertion portions 300 and extends by a predetermined pitch. In addition, each winding may include at least two single-layer parts 500 that are wound in one layer. The single-layer winding portion may include one slot insertion portion 300 that is inserted per slot group Sg adjacent to all poles. In all the jump portions 400 included in the single-layer part 500, the windings may not intersect each other. That is, the pitches of the jump portions 400 of the windings arranged in parallel with each other may be arranged in completely different areas, such as 7 pitches, 9 pitches (standard pitch), and 11 pitches, respectively. Accordingly, the overlap between the first winding portion 100 and the second winding portion 200 may be minimized, and accordingly, the width of the radial area to be wound may be reduced, thereby reducing the radial size of the motor system.

In addition, as illustrated in FIG. 6, at least one layer jump part 600 may be provided between two or more single-layer parts 500 and may cross two or more layers. Each winding in the jump portion 400 included in the layer jump part 600 may cross each other. The pitch of the layer jump part 600 may be 8 pitches, 9 pitches, or 10 pitches. Accordingly, even if the jump portion 400 in the single-layer part 500 is formed with a non-standard pitch as described above, the ends of the first winding portion 100 and the second winding portion 200, which are connected to each other, may be arranged on the same phase of the slot group Sg. For example, a t1 end of the first winding portion 100 and a T1 end of the second winding portion 200 that are coupled to each other may be wound on the X slot S-X of the adjacent slot group Sg, respectively.

In more detail, the single-layer part 500 of the first winding portion 100 may be wound on an odd-numbered layer based on the radial direction. That is, when six layers are provided based on the radial direction, the single-layer part 500 of each parallel winding of the first winding portion 100 may be wound on the first layer L-1, the third layer L-3, and the fifth layer L-5. In addition, the single-layer part 500 of the second winding portion 200 may be wound on an even-numbered layer based on the radial direction. That is, when six layers are provided based on the radial direction, the single layer part 500 of each parallel winding of the second winding portion 200 may be wound on the second layer L-2, the fourth layer L-4, and the sixth layer L-6.

In this case, the layer jump part 600 included in the first winding portion 100 and the second winding portion 200 may be provided to traverse either at least one of the odd-numbered layer or the even-numbered layer, regardless of whether it is the odd-numbered layer or the even-numbered layer. For example, a layer jump part 600 having a single layer part 500 in the first layer L-1 of the first winding portion 100 and a single layer part 500 in the third layer L-3 may be formed to traverse the second layer L-2 in between in addition to the first layer L-1 and the third layer L-3.

In addition, the number N1 of layer jump parts 600 included in each of the parallel windings included in the first winding portion 100 may follow Equation 1 below.

$$\text{Equation 1: } N1 = p(k-1)$$

Here, N1 is the number of layer jump parts 600 of the winding of the first winding portion 100, p is a constant (an integer greater than or equal to 1), and k is the number of odd-numbered layers in the radial direction. That is, when p is 1, one continuous single-layer part 500 is formed to include the slot insertion portions 300 corresponding to all poles in the circumferential direction, and when p is greater than or equal to 2, one continuous single-layer part 500 is formed to include the slot insertion portions 300 corresponding to only some of the poles in the circumferential direction (e.g., winding only in 1/2 or 1/4 of the circumferential direction), so that the layer jump parts 600 are provided more densely.

In addition, the number N2 of layer jump parts included in each parallel winding of the second winding portion 200 may follow Equation 2 below.

$$\text{Equation 2: } N2 = q(m-k-1)$$

Here, N2 is the number of layer jump parts 600 of the winding of the second winding portion 200, q is a constant (an integer greater than or equal to 1), m is the total number of layers (a multiple of 3), and k is the number of odd layers in the radial direction. That is, when q is 1, one continuous single-layer part 500 is formed to include the slot insertion portions 300 corresponding to all poles in the circumferential direction, and when q is greater than or equal to 2, one continuous single-layer part 500 is formed to include the slot insertion portions 300 corresponding to only some of the poles in the circumferential direction (e.g., winding only in 1/2 or 1/4 of the circumferential direction), so that the layer jump parts 600 are provided more densely.

In addition, when the total number of poles of the motor is S, the layer jump part 600 may be formed between the slot insertion portion 300 in which each of the windings is wound for the nSth time and the slot insertion portion 300 in which each of the windings is wound for the nS+1th time. In this case, n is a natural number. More specifically, when the total number of poles of the motor is 8, the layer jump part 600 may be formed between the slot insertion portion 300 in which each of the windings is wound as a multiple of 8, such as 8th, 16th, 24th, ..., and the slot insertion portion 300 adjacent thereto, that is, the slot insertion portion 300 in which the windings are wound as 9th, 17th, 25th, ..., etc.

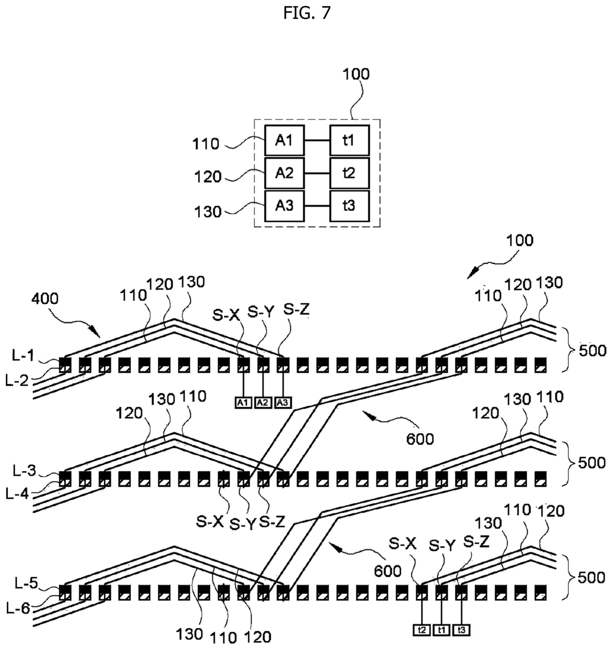

Hereinafter, the first winding portion 100 of the present disclosure will be described in more detail with reference to FIG. 7.

As illustrated in FIG. 7, the first winding portion 100 may include a first wire 110, a second wire 120, and a third wire 130 that are wound in parallel with each other. Each of the first wire 110, the second wire 120, and the third wire 130 may be wound three times around the stator St along the circumferential direction, and may be wound on the first layer L-1, the third layer L-3, and the fifth layer L-5, respectively. In this case, the first wire 110, the second wire 120, and the third wire 130 may be formed so that the jump portion 400 included in the single-layer part 500 does not intersect or overlap with each other, and the jump portion 400 included in the layer jump part 600 may be formed so as to intersect with each other.

In more detail, the first wire 110 of the first winding portion 100 may be provided with a jump portion 400 included in the single-layer part 500 in the first layer L-1 alternately arranged at 7 pitches and 11 pitches, the slot insertion portion 300 of one end of the first wire 110 may be inserted into the X slot S-X and the subsequent slot insertion portion 300 may be inserted alternately into the Z slot S-Z and the X slot S-X, the jump portion 400 included in the single-layer part 500 in the third layer L-3 may be provided with the jump portion 400 alternately arranged at 7 pitches and 11 pitches, the slot insertion portion 300 that comes into contact with the layer jump part 600 extending from the first layer L-1 may be inserted into the Z slot S-Z and then the slot insertion portion 300 may be inserted alternately into the X slot S-X and the Z slot S-Z, the jump portion 400 included in the single-layer part 500 in the fifth layer L-5 may be provided with a standard pitch, all slot insertion portions 300 including the slot insertion portion 300 that comes into contact with the layer jump part 600 extending from the third layer L-3 are inserted into the Y slot S-Y, and the slot insertion portion 300 at the other end of the first wire 110 may be inserted into the Y slot S-Y.

In addition, the second wire 120 of the first winding portion 100 may be provided with the jump portion 400 included in the single-layer part 500 in the first layer L-1 at the standard pitch, all the slot insertion portions 300 of one end of the second wire 120 may be wound on the Y slot S-Y, in the third layer L-3, the jump portion 400 included in the single-layer part 500 may be provided alternately at 7 pitches and 11 pitches, the slot insertion portion 300 that comes into contact with the layer jump part 600 extending from the first layer L-1 may be inserted into the X slot S-X and then the slot insertion portion 300 may be inserted alternately into the Z slot S-Z and the X slot S-X, in the fifth layer L-5, the jump portion 400 included in the single-layer part 500 may be provided with the standard pitch, the slot insertion portion 300 that comes into contact with the layer jump part 600 extending from the third layer L-3 may be inserted into the Z slot S-Z and then the slot insertion portion 300 may be inserted alternately into the X slot S-X and the Z slot S-Z, and the slot insertion portion 300 of the other end of the second wire 120 may be inserted into the X slot S-X.

In addition, the third wire 130 of the first winding portion 100 may be provided with the jump portion 400 included in the single-layer part 500 in the first layer L-1 alternately arranged at 7 pitches and 11 pitches, the slot insertion portion 300 of one end of the third wire 130 may be inserted into the Z slot S-Z and then the slot insertion portion 300 may be inserted alternately into the X slot S-X and the Z slot S-Z, in the third layer L-3, the jump portion 400 included in the single-layer part 500 is provided at the standard pitch, all slot insertion portions 300, which include the slot insertion portion 300 that comes into contact with the layer jump part 600 extending from the first layer L-1, may be inserted into the Y slot S-Y, in the fifth layer L-5, the jump portion 400 included in the single-layer part 500 may be provided alternately at 7 pitches and 11 pitches, the slot insertion portion 300 that comes into contact with the layer jump part 600 extending from the third layer L-3 may be inserted into the X slot S-X and then the slot insertion portion 300 may be inserted alternately into the Z slot S-Z and the X slot S-X, and the slot insertion portion 300 at the other end of the third wire 130 may be inserted into the Z slot S-Z.

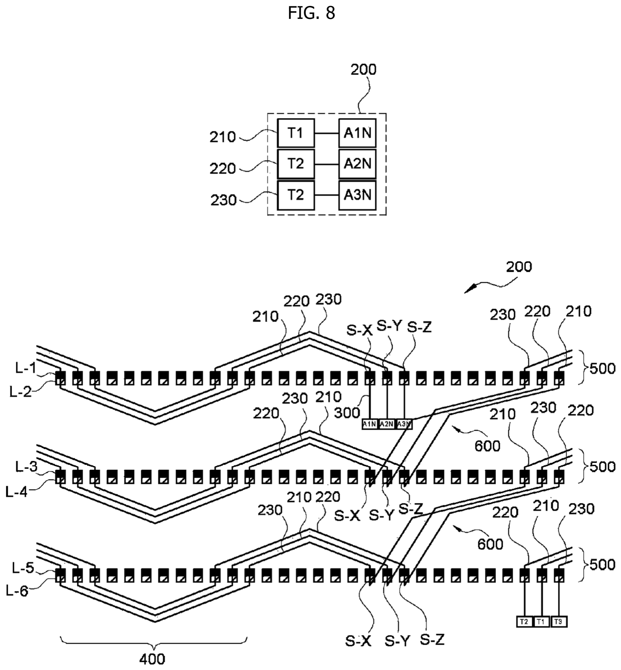

Hereinafter, the second winding portion 200 of the present disclosure will be described in more detail with reference to FIG. 8.

As illustrated in FIG. 8, the second winding portion 200 may include a fourth wire 210, a fifth wire 220, and a sixth wire 230 that are wound in parallel with each other. Each of the fourth wire 210, the fifth wire 220, and the sixth wire 230 may be wound three times along the circumferential direction around the stator St, and may be wound on the second layer L-2, the fourth layer L-4, and the sixth layer L-6, respectively. In this case, the fourth wire 210, the fifth wire 220, and the sixth wire 230 may be formed so that the jump portions 400 included in the single-layer part 500 do not intersect or overlap each other, and the jump portions 400 included in the layer jump parts 600 may be formed so as to intersect each other.

In more detail, the fourth wire 210 of the second winding portion 200 may be provided with a jump portion 400 included in the single-layer part 500 in the second layer L-2 alternately arranged at 7 pitches and 11 pitches, the slot insertion portion 300 of one end of the fourth wire 210 may be inserted into the X slot S-X and the subsequent slot insertion portion 300 may be inserted alternately into the Z slot S-Z and the X slot S-X, the jump portion 400 included in the single-layer part 500 in the fourth layer L-4 may be provided with the jump portion 400 alternately arranged at 7 pitches and 11 pitches, the slot insertion portion 300 that comes into contact with the layer jump part 600 extending from the second layer L-2 may be inserted into the Z slot S-Z and then, the slot insertion portion 300 may be inserted alternately into the X slot S-X and the Z slot S-Z, the jump portion 400 included in the single-layer part 500 in the sixth layer L-6 may be provided with a standard pitch, all slot insertion portions 300 including the slot insertion portion 300 that comes into contact with the layer jump part 600 extending from the fourth third layer L-4 are inserted into the Y slot S-Y, and the slot insertion portion 300 at the other end of the fourth wire 210 may be inserted into the Y slot S-Y.

In addition, the fifth wire 250 of the second winding portion 200 may be provided with the jump portion 400 included in the single-layer part 500 in the second layer L-2 at the standard pitch, all the slot insertion portions 300 of one end of the fifth wire 220 may be wound on the Y slot S-Y, the jump portion 400 included in the single-layer part 500 in the fourth layer L-4 may be provided alternately at 7 pitches and 11 pitches, the slot insertion portion 300 that comes into contact with the layer jump part 600 extending from the second layer L-2 may be inserted into the X slot S-X and then the slot insertion portion 300 may be inserted alternately into the Z slot S-Z and the X slot S-X, in the sixth layer L-6, the jump portion 400 included in the single-layer part 500 may be provided with the standard pitch, the slot insertion portion 300 that comes into contact with the layer jump part 600 extending from the fourth layer L-4 may be inserted into the Z slot S-Z and then the slot insertion portion 300 may be inserted alternately into the X slot S-X and the Z slot S-Z, and the slot insertion portion 300 of the other end of the fifth wire 220 may be inserted into the X slot S-X.

In addition, the sixth wire 230 of the second winding portion 200 may be provided with the jump portion 400 included in the single-layer part 500 in the second layer L-2 alternately arranged at 7 pitches and 11 pitches, the slot insertion portion 300 of one end of the sixth wire 230 may be inserted into the Z slot S-Z and then the slot insertion portion 300 may be inserted alternately into the X slot S-X and the Z slot S-Z, the jump portion 400 included in the single-layer part 500 in the fourth layer L-4 is provided at the standard pitch, all slot insertion portions 300, including the slot insertion portion 300 that comes into contact with the layer jump part 600 extending from the second layer L-2, may be inserted into the Y slot S-Y, in the sixth layer L-6, the jump portion 400 included in the single-layer part 500 may be provided alternately at 7 pitches and 11 pitches, the slot insertion portion 300 that comes into contact with the layer jump part 600 extending from the fourth layer L-4 may be inserted into the X slot S-X and then the slot insertion portion 300 may be inserted alternately into the Z slot S-Z and the X slot S-X, and the slot insertion portion 300 at the other end of the sixth wire 230 may be inserted into the Z slot S-Z.

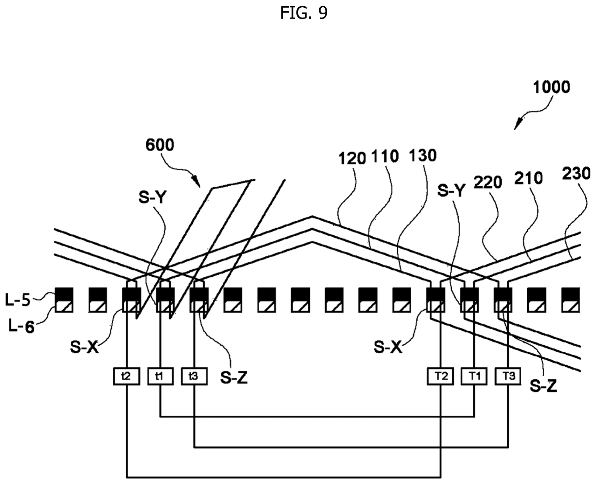

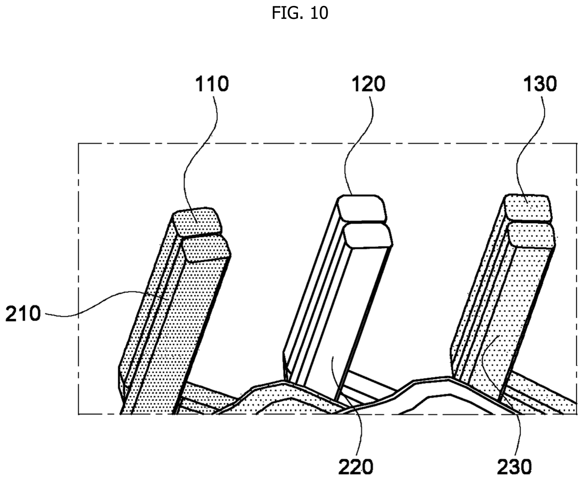

Hereinafter, the coupling relationship between the first winding portion 100 and the second winding portion 200 of the present disclosure will be described in more detail with reference to FIGS. 9 and 10.

When analyzing the balance of the back electromotive force phase and inductance in the arrangement of the first winding portion 100 and the second winding portion 200 described above, in the case of the first wire 110 and the fourth wire 210 that are connected to each other, the number of slots in which the first wire 110 is wound is 8 in all of the first layer L-1, the third layer L-3, and the fifth layer L-5, and the number of slots in which the fourth wire 210 is wound is 8 in all of the second layer L-2, the fourth layer L-4, and the sixth layer L-6, so it may be confirmed that the inductance phase is balanced. In addition, it may be confirmed that the first wire 110 is wound 4 times in the X slot S-X and 4 times in the Z slot S-Z in the first layer L-1, 4 times in the X slot S-X and 4 times in the Z slot S-Z in the third layer L-3, 8 times in the Y slot S-Y in the fifth layer L-5, and the fourth wire 210 is wound 4 times in the X slot S-X and 4 times in the Z slot S-Z in the second layer L-2, 4 times in the X slot S-X and 4 times in the Z slot S-Z in the fourth layer L-4, and 8 times in the Y slot S-Y in the sixth layer L-6. Accordingly, it was confirmed that the sum of the number of times the series-connected windings composed of the first wire 110 and the fourth wire 210 are wound in the X slot S-X, the Y slot S-Y, and the Z slot S-Z is 16, so the back electromotive force phase is also balanced.

In addition, in the case of the second wire 120 and the fifth wire 220 connected to each other, the number of slots in which the second wire 120 is wound is 8 in all of the first layer L-1, the third layer L-3, and the fifth layer L-5, and the number of slots in which the fifth wire 220 is wound is 8 in all of the second layer L-2, the fourth layer L-4, and the sixth layer L-6, so it was confirmed that the inductance phase is balanced. In addition, it may be confirmed that the second wire 120 is wound 8 times in the Y slot S-Y in the first layer L-1, 4 times in the X slot S-X in the third layer L-3, 4 times in the Z slot S-Z, 4 times in the X slot S-X in the fifth layer L-5, and 4 times in the Z slot S-Z, and the fifth wire 220 is wound 8 times in the Y slot S-Y in the second layer L-2, 4 times in the X slot S-X in the fourth layer L-4, and 4 times in the Z slot S-Z, and 4 times in the X slot S-X in the sixth layer L-6. Accordingly, it was confirmed that the sum of the number of times the series-connected windings composed of the second wire 120 and the fifth wire 220 are wound in the X slot S-X, the Y slot S-Y, and the Z slot S-Z is 16, so the back electromotive force phase is also balanced.

In the case of the third wire 130 and the sixth wire 230 connected to each other, the number of slots in which the third wire 130 is wound is 8 in all of the first layer L-1, the third layer L-3, and the fifth layer L-5, and the number of slots in which the sixth wire 230 is wound is 8 in all of the second layer L-2, the fourth layer L-4, and the sixth layer L-6, so it was confirmed that the inductance phase is balanced. In addition, it may be confirmed that the third wire 130 is wound 4 times in the X slot S-X in the first layer L-1, 4 times in the Z slot S-Z, 8 times in the Y slot S-Y in the third layer L-3, 4 times in the X slot S-X and 4 times in the Z slot S-Z in the fifth layer L-5, and the sixth wire 230 is wound 4 times in the X slot S-X in the second layer L-2, 4 times in the Z slot S-Z, 8 times in the Y slot S-Y in the fourth layer L-4, and 4 times in the X slot S-X and 4 times in the Z slot S-Z in the sixth layer L-6. Accordingly, it was confirmed that the sum of the number of times the series-connected windings composed of the third wire 130 and the sixth wire 230 are wound in the X slot S-X, the Y slot S-Y, and the Z slot S-Z is 16, so the back electromotive force phase is also balanced.

In addition, according to the arrangement described above, as illustrated in FIG. 9, the other end of the first wire 110 of the first winding portion 100 and the other end of the fourth wire 210 of the second winding portion 200 may be drawn out from the Y slot S-Y of the adjacent slot group Sg and connected to each other, the other end of the second wire 120 of the first winding portion 100 and the other end of the fifth wire 220 of the second winding portion 200 may be drawn out from the X slot S-X of the adjacent slot group Sg and connected to each other, and the other end of the third wire 130 of the first winding portion 100 and the other end of the sixth wire 230 of the second winding portion 200 may be drawn out from the Z slot S-Z of the adjacent slot group Sg and are connected to each other and may be combined. Accordingly, as illustrated in FIG. 10, the ends of each winding may be adjacent, and each winding may be welded together by contacting each other.

The continuous winding assembly of the present disclosure having the configuration described above satisfies back electromotive force and inductance balance by having windings between each parallel circuit, which are interconnected to form a series winding, and adopt a specific pitch and shape, and allows each wire to be connected to be positioned in the same phase to enable welding without twisting, thereby having the effect of easily forming a series winding without a terminal assembly.

The present disclosure should not be construed to being limited to the above-mentioned exemplary embodiment. The present disclosure may be applied to various fields and may be variously modified by those skilled in the art without departing from the scope of the present disclosure claimed in the claims. Therefore, it is obvious to those skilled in the art that these alterations and modifications fall in the scope of the present disclosure.

**Claims**

1. A continuous winding assembly applied to a stator, the stator including, for each pole of a rotor, a predetermined group of slots adjacent and provided at continuous positions to the poles of the rotor, the continuous winding assembly comprising:

   a first winding portion that includes a plurality of windings extending along a circumferential direction of the stator and arranged in parallel with each other, each of which is wound by being inserted one by one into the slots included in a slot group; and

a second winding portion that is electrically connected to the first winding portion, and includes the plurality of windings extending along the circumferential direction of the stator and arranged in parallel with each other, each of which is wound by being inserted one by one into the slots included in the slot group,

wherein each of the windings of the first winding portion and each of the windings of the second winding portion are connected in a one-to-one correspondence with each other, but are connected to each other by being in direct contact with each other,

the windings are inserted into the slots by forming a plurality of layers in a radial direction,

each of the windings included in the first winding portion does not intersect each other within the same layer, and

each of the windings included in the second winding portion does not intersect each other within the same layer.

2. The continuous winding assembly of claim 1, wherein an end of the second winding portion is inserted into the slot group adjacent to the slot group into which an end of the winding of the first winding portion is inserted.

3. The continuous winding assembly of claim 1 or 2, wherein the winding includes:

a plurality of slot insertion portions that are inserted into the slots and extend in an axial direction of a motor;

a jump portion that is provided between the plurality of slot insertion portions and extends by a predetermined pitch; and

at least two single-layer parts that are wound on one of the layers, and

the single-layer partincludes the slot insertion portions that are inserted one by one per slot group adjacent to all the poles, and

at least one layer jump part that is provided between two or more of the single-layer parts and crosses two or more of the layers.

4. The continuous winding assembly of claim 3, wherein the jump portions included in the first winding portion and the second winding portion have one pitch value selected from among 7 pitches, 9 pitches, and 11 pitches,

the jump portions of each parallel winding included in the first winding portion do not intersect each other, and

the jump portions of each parallel winding included in the second winding portion do not intersect each other.

5. The continuous winding assembly of claim 3 or 4, wherein the layer jump parts included in the first winding portion and the second winding portion have one pitch value selected from among 8 pitches, 9 pitches, and 10 pitches.

6. The continuous winding assembly of any one of claims 3 to 5, wherein a total number of the layers in which the first winding portion and the second winding portion are wound is a multiple of 3.

7. The continuous winding assembly of claim 6, wherein a number N1 of the layer jump parts included in each parallel winding of the first winding portion and a number N2 of the layer jump parts included in each parallel winding of the second winding portion follow the following Equation.

$$N1 = p(k-1)$$

Equation: $N2 = q(m\text{-}k\text{-}1)$

(Here,

N1: The number of layer jump parts of the winding of the first winding portion

N2: The number of layer jump parts of the winding of the second winding portion

p, q: Constants (integers greater than or equal to 1)

m: Total number of layers (multiples of 3)

k: The number of odd-numbered layers based on the radial direction)

8. The continuous winding assembly of any one of claims 3 to 7, wherein when a total number of poles of the motor is S, the layer jump part is formed between the slot insertion portion where each of the windings is wound for an nSth time and the slot insertion portion where each of the windings is wound for an nS+1th time (n is a natural number).

9. The continuous winding assembly of any one of claims 3 to 8, wherein the single-layer part of the first winding portion is wound on an odd-numbered layer based on the radial direction, and

the single-layer part of the second winding portion is wound on an even-numbered layer based on the radial direction.

10. The continuous winding assembly of any one of claims 3 to 9, wherein the layer jump part traverses either the odd-numbered or the even-numbered layer in the radial direction.

FIG. 1

WINDING 1          WINDING 2

FIG. 2

FIG. 3

FIG. 4

FIG. 5

FIG. 6

FIG. 7

FIG. 8

FIG. 9

FIG. 10

Europäisches
Patentamt

European
Patent Office

Office européen
des brevets

## EUROPEAN SEARCH REPORT

**Application Number**

EP 25 21 3190

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | CN 114 465 390 A (ELECTRIC SHARE LTD COMPANY IN AFRICAN ZHONGZHOU ERA) 10 May 2022 (2022-05-10) * figures 1-4,8-9 * * paragraphs [0058], [0101] - [0104] * ----- | 1-10 | INV. H02K3/28 |
| A | WO 98/54822 A1 (DENSO CORP [JP]; UMEDA ATSUSHI [JP] ET AL.) 3 December 1998 (1998-12-03) * figures 4-5 * * paragraph [0050] * ----- | 1-10 | |

TECHNICAL FIELDS
SEARCHED     (IPC)

H02K

The present search report has been drawn up for all claims

| Place of search | Date of completion of the search | Examiner |
|---|---|---|
| The Hague | 27 February 2026 | Friedrich, Léo |

EPO FORM 1503 03.82 (P04C01)

## ANNEX TO THE EUROPEAN SEARCH REPORT
## ON EUROPEAN PATENT APPLICATION NO.

EP 25 21 3190

This annex lists the patent family members relating to the patent documents cited in  the above-mentioned European search report.
The members are as contained in the European Patent Office EDP file on
The European Patent Office is in no way liable for these particulars which are merely given for the purpose of information.

27-02-2026

| Patent document cited in search report | | Publication date | Patent family member(s) | | Publication date |
|---|---|---|---|---|---|
| CN 114465390 | A | 10-05-2022 | NONE | | |
| WO 9854822 | A1 | 03-12-1998 | AU | 710990 B2 | 07-10-1999 |
| | | | AU | 4222897 A | 30-12-1998 |
| | | | BR | 9801214 A | 13-07-1999 |
| | | | CA | 2231123 A1 | 26-11-1998 |
| | | | CN | 1202028 A | 16-12-1998 |
| | | | DE | 69800498 T2 | 06-09-2001 |
| | | | EP | 0881752 A1 | 02-12-1998 |
| | | | ES | 2154065 T3 | 16-03-2001 |
| | | | ID | 20396 A | 03-12-1998 |
| | | | KR | 19980086538 A | 05-12-1998 |
| | | | MY | 128342 A | 31-01-2007 |
| | | | US | 5998903 A | 07-12-1999 |
| | | | US | 6198190 B1 | 06-03-2001 |
| | | | WO | 9854822 A1 | 03-12-1998 |
| | | | WO | 9854823 A1 | 03-12-1998 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7269888 B